# EUROPÄISCHE PATENTSCHRIFT

(11) **EP 2 197 719 B1**
(45) Veröffentlichungstag und Bekanntmachung des Hinweises auf die Patenterteilung: **04.05.2011**
(21) Anmeldenummer: 08802805.5
(22) Anmeldetag: 07.10.2008
(51) Int. Cl.: B60T 13/563

(54) **UNTERDRUCKBREMSKRAFTVERSTÄRKER FÜR EINE KRAFTFAHRZEUGBREMSANLAGE**
VACUUM BRAKE FORCE BOOSTER FOR A VEHICLE BRAKING SYSTEM
SERVOFREIN À DÉPRESSION POUR UN SYSTÈME DE FREINAGE DE VÉHICULE AUTOMOBILE

(30) Priorität: 18.10.2007 DE 102007049960
(43) Veröffentlichungstag der Anmeldung: 23.06.2010
(73) Patentinhaber: Lucas Automotive GmbH, 56070 Koblenz (DE)
(72) Erfinder: SCHLÜTER, Frank, 56154 Boppard (DE); SCHLÜTER, Alexander, 56206 Kammerforst (DE); SCHLÜTER, Stefan, 56206 Kammerforst (DE); GERDT, Irina, 56070 Koblenz (DE); SCHLÜTER, Peter, verstorben (DE)
(74) Vertreter: Thum, Bernhard
(86) Internationale Anmeldenummer: PCT/EP2008/008448
(87) Internationale Veröffentlichungsnummer: WO 2009/052941

(56) Entgegenhaltungen:
- US-A- 4 484 509

## Beschreibung

Die vorliegende Erfindung betrifft einen Unterdruckbremskraftverstärker für eine Kraftfahrzeugbremsanlage nach dem Oberbegriff von Patentanspruch 1 mit
- einem mit einem Bremspedal koppelbaren Krafteingangsglied,
- einer Steuerventileinrichtung, die nach Maßgabe einer Verlagerung des Krafteingangsglieds betätigbar ist,
- einer Tandemkammeranordnung, mit einer ersten und zweiten Arbeitskammer und einer ersten und zweiten Unterdruckkammer und mit
- einem Kraftausgangsglied zum Abgeben einer Betätigungskraft an eine Hauptbremszylinderanordnung,
   wobei die erste Arbeitskammer und die erste Unterdruckkammer über eine erste bewegliche Wand sowie die zweite Arbeitskammer und die zweite Unterdruckkammer über eine zweite bewegliche Wand voneinander getrennt sind und jeweils wahlweise über die Steuerventileinrichtung miteinander verbindbar sind und wobei wenigstens ein pneumatisches Verbindungselement vorgesehen ist, über das die erste Arbeitskammer dauerhaft mit der zweiten Arbeitskammer verbunden ist.

Ein derartiger Unterdruckbremskraftverstärker ist aus dem Stand der Technik bekannt.

So zeigt beispielsweise das Dokument DE 29 42 024 A1 einen Unterdruckbremskraftverstärker mit einer Tandemkammeranordnung in Figur 3. Bei diesem Unterdruckbremskraftverstärker wird eine pneumatische Verbindung zwischen entsprechenden Arbeitskammern der Tandemkammeranordnung durch hohl ausgebildete Zugbolzen erreicht. Es hat sich jedoch gezeigt, dass bei moderneren Unterdruckbremskraftverstärkern mehr und mehr die Zugbolzen weggelassen werden sollen und dass nur entsprechende Befestigungsbolzen außenseitig an dem Verstärkergehäuse angebracht werden, die sich nicht durch das Verstärkergehäuse hindurch erstrecken.

Als weiteres Dokument zum Stand der Technik wird auf US 6,772,674 B2 verwiesen. Dieses Dokument zeigt ebenfalls einen Unterdruckbremskraftverstärker mit Tandemkammeranordnung, wobei die beiden Arbeitskammern über ein Rohrelement pneumatisch miteinander verbunden sind. Das Rohrelement ist fest am Verstärkergehäuse angebracht, wobei die erste bewegliche Wand, die die erste Arbeitskammer von der ersten Unterdruckkammer trennt, auf diesem Rohrelement beweglich abgleiten kann. Eine ähnliche Lösung ist ferner aus dem Dokument US 6,588,317 B2 sowie aus dem Dokument US 6,755,117 B2 bekannt.

Das Dokument US 4,484,509, das als nächstliegender Stand der Technik anzusehen ist, betrifft einen Unterdruckbremskraftverstärker, bei dem zur pneumatischen Verbindung von erster und zweiter Arbeitskammer hohle Stangen vorgesehen sind, die rohrförmig ausgebildet und fest mit den beiden beweglichen Wänden verbunden sind, beispielsweise verschweißt oder verklebt.

Es ist eine Aufgabe der vorliegenden Erfindung, einen Unterdruckbremskraftverstärker der eingangs bezeichneten Art bereitzustellen, bei dem selbst unter Vermeidung von Zugbolzen einen einfache und dauerhaft stabile Verbindung zwischen den beiden Arbeitskammer gewährleistet ist.

Diese Aufgabe wird durch einen Unterdruckbremskraftverstärker der eingangs bezeichneten Art gelöst, bei dem vorgesehen ist, dass das pneumatische Verbindungselement an der ersten beweglichen Wand und der zweiten beweglichen Wand angebracht ist, wobei das pneumatische Verbindungselement einen Anlageflansch aufweist, mit dem es an der ersten beweglichen Wand anliegt. Durch diese Maßnahme lässt sich das pneumatische Verbindungselement sicher mit der ersten beweglichen Wand verbinden.

Erfindungsgemäß wird also das pneumatische Verbindungselement im Wesentlichen fest an beiden beweglichen Wänden angebracht, die sich weitgehend synchron zueinander bewegen. Dadurch ist eine stabile Anordnung mit einer zuverlässigen Verbindung der beiden Arbeitskammern gewährleistet.

Eine Weiterbildung der Erfindung sieht vor, dass das pneumatische Verbindungselement hohl ausgeführt und dichtend in einer lagestabilen Trennwand geführt ist, wobei die Trennwand die erste Unterdruckkammer von der zweiten Arbeitskammer dichtend abtrennt. Das pneumatische Verbindungselement ist demnach durch die lagestabile Trennwand hindurchgeführt, wobei in dieser ein entsprechendes Dichtelement angeordnet ist. Durch die Führung in diesem Dichtelement in der lagestabilen Trennwand wird das pneumatische Verbindungselement an drei Stellen gelagert, nämlich an seinen Befestigungsstellen an der ersten und zweiten beweglichen Wand sowie durch seine relativ bewegbare Lagerstelle innerhalb des Dichtelements in der Trennwand. Dadurch lässt sich eine zuverlässige Führung erreichen und Verklemmungen innerhalb des Bremskraftverstärkers unterbinden.

Ferner kann vorgesehen sein, dass zwischen der ersten beweglichen Wand und dem pneumatischen Verbindungselement eine erste umlaufende Ringdichtung angeordnet ist. Je nach Wunsch kann diese Ringdichtung steifer oder weniger steif ausgebildet sein, um damit auch die Qualität der Führung des pneumatischen Verbindungselements wunschgemäß einzustellen. Bei einer Ausführungsvariante der Erfindung kann vorgesehen sein, dass die erste umlaufende Ringdichtung integral mit der ersten beweglichen Wand ausgebildet ist.

Ferner sieht eine Ausführungsform der Erfindung vor, dass das pneumatische Verbindungselement einen Stirnflansch aufweist, mit dem es an der zweiten beweglichen Wand dichtend anliegt. Dabei kann, ähnlich wie hinsichtlich der ersten beweglichen Wand beschrieben, auch in diesem Zusammenhang vorgesehen sein, dass zwischen der zweiten beweglichen Wand und dem pneumatischen Verbindungselement eine zweite umlaufende Ringdichtung angeordnet ist. Je nach Bedarf ist die Steifigkeit der zweiten umlaufenden Ringdichtung zu wählen, um die Führungseigenschaften wunschgemäß einzustellen. Auch in diesem Zusammenhang kann vorgesehen sein, dass die zweite umlaufende Ringdichtung integral mit der zweiten beweglichen Wand ausgebildet ist.

Wie vorstehend bereits angedeutet, muss das wenigstens eine pneumatische Verbindungselement in der Trennwand dichtend geführt sein. Hierfür kann vorgesehen sein, dass in der Trennwand eine umlaufende Gleitdichtung vorgesehen ist, die das pneumatische Verbindungselement dichtend und relativ bewegbar umgreift. Auch diese umlaufende Gleitdichtung kann steifer oder weniger steif ausgebildet werden, wodurch sich die Dichtungseigenschaften aber ebenso auch die Führungseigenschaften wunschgemäß bestimmen lassen.

Hinsichtlich der Ausgestaltung des pneumatischen Dichtelements kann vorgesehen sein, dass dieses einen ersten Rohrabschnitt und einen gegenüber dem ersten Rohrabschnitt durchmesserkleineren Rohrabschnitt aufweist, wobei sich die beiden Rohrabschnitte in einem axialen Bereich überlappen und über wenigstens einen Verbindungssteg miteinander verbunden sind. Daraus erhält man eine verhältnismäßig stabile Struktur für das pneumatische Dichtelement, die auch in der Herstellung einfach ist. So kann in diesem Zusammenhang ferner vorgesehen sein, dass zwischen den beiden Rohrabschnitten neben dem wenigstens einen Verbindungssteg wenigstens ein Verbindungskanal vorgesehen ist, der in die zweite Arbeitskammer mündet. Ferner kann vorgesehen sein, dass der erste Rohrabschnitt in die erste Arbeitskammer mündet und dass der zweite Rohrabschnitt stirnseitig gegenüber der zweiten Unterdruckkammer verschlossen ist.

Die Erfindung wird im folgenden beispielhaft anhand der beiliegenden Figuren erläutert. Es stellen dar:
- Figur 1: eine achsenthaltende Teilschnittansicht eines erfindungsgemäßen Un- terdruckbremskraftverstärkers und
- Figur 2: eine Detailansicht eines Querschnitts zu dem pneumatischen Dichtele- ment gemäß Figur 1.

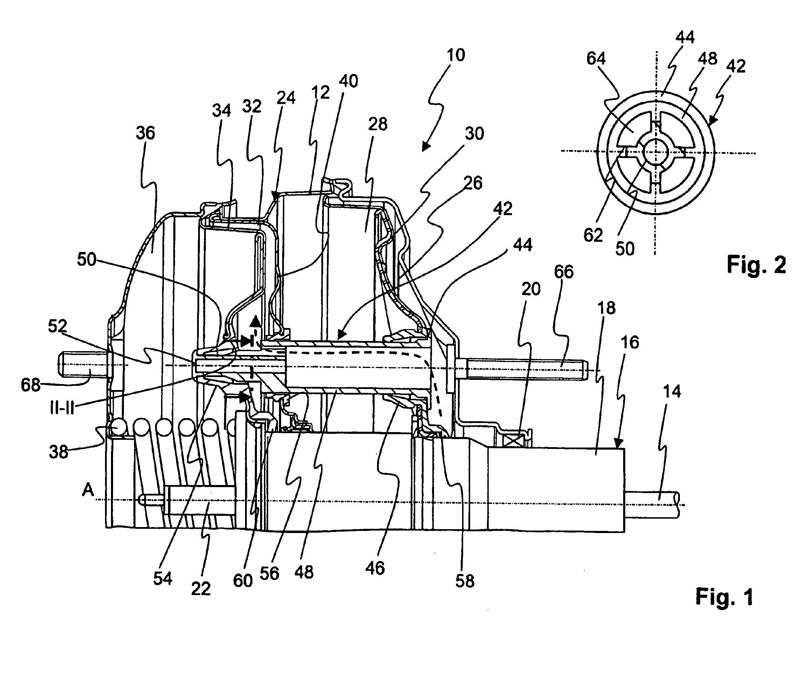

In Figur 1 ist ein erfindungsgemäßer Unterdruckbremskraftverstärker in einem achsenthaltenden Teilschnitt dargestellt und allgemein mit 10 bezeichnet. Dieser umfasst ein Verstärkergehäuse 12, in das ein Krafteingangsglied 14 entlang einer Längsachse A eingeführt ist. Das Krafiteingangsglied 14 mündet in eine nicht näher dargestellte Steuerventileinrichtung 16, die im Folgenden in ihrer Funktionsweise noch näher erläutert wird. Die Steuerventileinrichtung 16 weist ein Steuerventilgehäuse 18 auf, das in dem Verstärkergehäuse 12 bewegbar und mit einer Dichtung 20 dichtend geführt ist. Von dem Steuerventilgehäuse 18 geht ein Kraftausgangsglied 22 aus, das an eine nicht gezeigte Hauptbremszylinderanordnung anschließbar ist und über das eine Bremskraft auf die Hauptbremszylinderanordnung übertragen werden kann.

In dem Verstärkergehäuse 12 ist eine Tandemkammeranordnung 24 angeordnet. Diese umfasst eine erste Arbeitskammer 26 sowie eine erste Unterdruckkammer 28, die über eine erste bewegliche Wand 30 pneumatisch voneinander getrennt sind. Die Tandemkammeranordnung 24 weist ferner eine zweite Arbeitskammer 32, die über eine zweite bewegliche Wand 34 von einer zweiten Unterdruckkammer 36 getrennt ist. In der zweiten Unterdruckkammer 36 ist eine Rückstellfeder 38 angeordnet, die das Steuerventilgehäuse 18 in die in Figur 1 Ausgangsstellung vorspannt.

Die beiden Kammeranordnungen, die aus erster Arbeitskammer 26 und Unterdruckkammer 28 sowie aus zweiter Arbeitskammer 32 und Unterdruckkammer 36 bestehen, sind durch eine im Verstärkergehäuse 12 festgelegte lagestabile Trennwand 40 pneumatisch voneinander getrennt.

Wie allgemein bei herkömmlichen Unterdruckbremskraftverstärkern mit Tandemkammeranordnung bekannt ist, ist die erste Arbeitskammer 26 mit der zweiten Arbeitskammer 32 pneumatisch miteinander zu verbinden. Dies geschieht erfindungsgemäß über ein pneumatisches Verbindungselement 42. Das pneumatische Verbindungselement 42 weist an seinem in Figur 1 rechten Ende einen Flansch 44 auf, mit dem es an der ersten beweglichen Wand 30 anliegt. Es ist in einer Dichtmanschette 46 dichtend aufgenommen, wobei die Dichtmanschette 46 einstückig mit einer elastomeren Membran der beweglichen Wand 30 verbunden, d.h. integral mit dieser ausgebildet ist. Man erkennt, dass das pneumatische Verbindungselement 42 rohrförmig ausgebildet ist, wobei es einen ersten Rohrabschnitt 48 und einen zweiten Rohrabschnitt 50 aufweist. Der erste Rohrabschnitt 48 mündet mit seinem hohlen Innenraum in die erste Arbeitskammer 26. Der zweite Rohrabschnitt 50 ist an seinem in Figur 1 linken Ende mit einer flanschartigen Stirnwand 52 dichtend verschlossen. Auch der zweite Rohrabschnitt 50 ist in einer Dichtmanschette 54 dichtend aufgenommen, die einerseits an der flanschartigen Stirnwand 52 anliegt und andererseits den Rohrabschnitt 50 endseitig dichtend umgreift. Die Manschette 54 ist integral mit einer elastomeren Membran der zweiten beweglichen Wand 34 ausgebildet.

Der durchmessergrößere erste Rohrabschnitt 48 des pneumatischen Verbindungselements 42 ist in einer Ringdichtung 56 dichtend, jedoch relativ bewegbar aufgenommen. Die Ringdichtung 56 ist dichtend in einem Durchbruch der lagestabilen Trennwand 40 gehalten.

Wie an sich bekannt, sind die beiden beweglichen Wände 30 und 34 zur gemeinsamen Bewegung mit dem Steuerventilgehäuse 18 an ihren radial inneren Bereichen 58 und 60 fest verbunden. Dadurch kann eine an den beweglichen Wänden 30 und 34 anliegende Kraft, die aus einer Druckdifferenz zwischen jeweiliger Arbeitskammer und Unterdruckkammer resultiert, auf das Steuerventilgehäuse 18 übertragen werden, wobei die daraus resultierende Kraft über das Kraftausgangsglied 22 in Ergänzung zu der über das Krafteingangsglied 14 eingeleiteten Betätigungskraft an die nicht gezeigte Hauptbremszylinderanordnung abgegeben werden kann.

In Figur 2 erkennt man eine Schnittansicht durch das pneumatische Verbindungselement 42, wie in Figur 1 entlang der Schnittlinie II-II dargestellt. Man erkennt dort, dass der erste Rohrabschnitt 48, an dem endseitig der Flansch 44 angeordnet ist, mit dem zweiten Rohrabschnitt 50 über vier radial verlaufende Verbindungsstege 62 verbunden ist. Zwischen diesen Verbindungsstegen 62 sind vier ringsegmentartige Verbindungskanäle 64 angeordnet, über die eine pneumatische Verbindung von der ersten Arbeitskammer 26 durch den hohlen Rohrabschnitt 48 in die zweite Arbeitskammer 32 möglich ist, wie dies durch den strichlierten Pfeil in Figur 1 gezeigt ist. Schließlich erkennt man in Figur 1 noch am Verstärkergehäuse 12 angebrachte Befestigungsbolzen 66 und 68. Mit den Befestigungsbolzen 66 wird der Bremskraftverstärker 10 mit einer Spritzwand des Kraftfahrzeugs verbunden. Mit den Befestigungsbolzen 68 erfolgt eine Verbindung am Verstärkergehäuse.

Im Betrieb, d.h. bei Betätigung des Krafteingangsglieds über ein Bremspedal, werden durch "Öffnen" des Steuerventils 16 die beiden Arbeitskammern 26 und 32 mit der Umgebungsatmosphäre verbunden, so dass sich in diesen gegenüber den Unterdruckkammern 28 und 36 ein Überdruck aufbaut, der jeweils an der ersten und zweiten beweglichen Wand 30 und 34 anliegt. Über das pneumatische Verbindungselement 42 kommt es entsprechend dem strichlierten Pfeil gemäß Figur 1 zu einem Druckausgleich in den beiden Arbeitskammern 26 und 32. Das pneumatische Verbindungselement 42 ist dabei derart ausgebildet, dass es über die flanschartige Stirnwand 52 sowie die beiden Dichtmanschetten 46 und 54 jeweils mit der ersten beweglichen Wand 30 und der zweiten beweglichen Wand 34 dichtend verbunden ist. Die Ringdichtung 56 sorgt für eine dichtende Führung des Rohrabschnitts 42.

Das pneumatische Verbindungselement 42 bietet somit eine zuverlässige pneumatische Verbindung zwischen den beiden Arbeitskammern 26 und 32, die es ermöglicht, dass die beweglichen Wände 30 und 32 sich im Wesentlichen synchron zueinander bewegen können, wobei deren Bewegung über das Dichtelement 56 in der lagestabilen Trennwand 40 geführt ist. Es versteht sich, dass eine Mehrzahl pneumatischer Verbindungselemente 42 über den Umfang des Unterdruckbremskraftverstärkers 10 innerhalb der Kammeranordnung 24 verteilt angeordnet sein kann. Dadurch wird eine klemmfreie Führung der Bewegung der beweglichen Wände 30 und 34 im Verstärkergehäuse 12 unterstützt.

Insgesamt sorgt die erfindungsgemäße Ausgestaltung des pneumatischen Verbindungselements 42 für eine dauerhafte pneumatische Verbindung der beiden Arbeitskammern 26 und 32, die zusätzlich eine Stabilisierung der Bewegung der beweglichen Wände 30 und 34 erreicht und darüber hinaus keine sich durch das Verstärkergehäuse 12 hindurch erstreckenden Zugbolzen fordert, wie dies etwa beim Stand der Technik der Fall ist. Dadurch bieten sich mehr Freiräume bei der Konstruktion des Unterdruckbremskraftverstärkers 10 gemäß der Erfindung im Gegensatz zum Stand der Technik.

## Patentansprüche

1. Unterdruckbremskraftverstärker (10) für eine Kraftfahrzeugbremsanlage mit:
- einem mit einem Bremspedal koppelbaren Krafteingangsglied (14),
- einer Steuerventileinrichtung (16), die nach Maßgabe einer Verlagerung des Krafteingangsglieds (14) betätigbar ist,
- einer Tandemkammeranordnung (24), mit einer ersten und zweiten Arbeitskammer (26, 32) und einer ersten und zweiten Unterdruckkammer (28, 36) und mit
- einem Kraftausgangsglied (22) zum Abgeben einer Betätigungskraft an eine Hauptbremszylinderanordnung,
wobei die erste Arbeitskammer (26) und die erste Unterdruckkammer (28) über eine erste bewegliche Wand (30) sowie die zweite Arbeitskammer (32) und die zweite Unterdruckkammer (36) über eine zweite bewegliche Wand (34) voneinander getrennt sind und jeweils wahlweise über die Steuerventileinrichtung (16) miteinander verbindbar sind und
wobei wenigstens ein pneumatisches Verbindungselement (42) vorgesehen ist, über das die erste Arbeitskammer (26) dauerhaft mit der zweiten Arbeitskammer (32) verbunden ist,
wobei das pneumatische Verbindungselement (42) an der ersten beweglichen Wand (30) und der zweiten beweglichen Wand (34) angebracht ist,
**dadurch gekennzeichnet, dass**
das pneumatische Verbindungselement (42) einen Anlageflansch (44) aufweist, mit dem es dichtend an der ersten beweglichen Wand (30) dichtend anliegt, und dass das pneumatische Verbindungselement (42) einen Stirnflansch (52) aufweist, mit dem es dichtend an der zweiten beweglichen Wand (34) dichtend anliegt.

2. Unterdruckbremskraftverstärker (10) nach Anspruch 1,
**dadurch gekennzeichnet, dass** das pneumatische Verbindungselement (42) hohl ausgeführt und dichtend in einer lagestabilen Trennwand (40) geführt ist, wobei die Trennwand (40) die erste Unterdruckkammer (28) von der zweiten Arbeitskammer (32) dichtend abtrennt.

3. Unterdruckbremskraftverstärker (10) nach Anspruch 1 oder 2,
**dadurch gekennzeichnet, dass** zwischen der ersten beweglichen Wand (30) und dem pneumatischen Verbindungselement (42) eine erste umlaufende Ringdichtung (46) angeordnet ist.

4. Unterdruckbremskraftverstärker (10) nach Anspruch 3,
**dadurch gekennzeichnet, dass** die erste umlaufende Ringdichtung (46) integral mit der ersten beweglichen Wand (30) ausgebildet ist.

5. Unterdruckbremskraftverstärker (10) nach einem der vorangehenden Ansprüche,
**dadurch gekennzeichnet, dass** zwischen der zweiten beweglichen Wand (34) und dem pneumatischen Verbindungselement (42) eine zweite umlaufende Ringdichtung (54) angeordnet ist.

6. Unterdruckbremskraftverstärker (10) nach Anspruch 5,
**dadurch gekennzeichnet, dass** die zweite umlaufende Ringdichtung (54) integral mit der zweiten beweglichen Wand (34) ausgebildet ist.

7. Unterdruckbremskraftverstärker (10) nach Anspruch 2 und einem der vorangehenden Ansprüche,
**dadurch gekennzeichnet, dass** in der Trennwand (40) eine umlaufende Gleitdichtung (56) vorgesehen ist, die das pneumatische Verbindungselement (42) dichtend und relativ bewegbar umgreift.

8. Unterdruckbremskraftverstärker (10) nach einem der vorangehenden Ansprüche,
**dadurch gekennzeichnet, dass** das pneumatische Verbindungselement (42) einen ersten Rohrabschnitt (48) und einen gegenüber dem ersten Rohrabschnitt (48) durchmesserkleineren zweiten Rohrabschnitt (50) aufweist, wobei sich die beiden Rohrabschnitte (48, 50) in einem axialen Bereich überlappen und über wenigstens einen Verbindungssteg (62) miteinander verbunden sind.

9. Unterdruckbremskraftverstärker (10) nach Anspruch 8,
**dadurch gekennzeichnet, dass** zwischen den beiden Rohrabschnitten (48, 50) neben dem wenigstens einen Verbindungssteg (62) wenigstens ein Verbindungskanal (64) vorgesehen ist, der in die zweite Arbeitskammer (32) mündet.

10. Unterdruckbremskraftverstärker (10) nach Anspruch 8 oder 9,
**dadurch gekennzeichnet, dass** der erste Rohrabschnitt (48) in die erste Arbeitskammer (26) mündet und dass der zweite Rohrabschnitt (50) stirnseitig gegenüber der zweiten Unterdruckkammer (36) verschlossen ist.

## Claims

1. Vacuum-assisted brake-force booster (10) for a motor-vehicle braking system with:
- a force-input member (14) which is capable of being coupled with a brake pedal,
- a control-valve device (16) which is capable of being actuated in accordance with a displacement of the force-input member (14),
- a tandem chamber arrangement (24) with a first and a second working chamber (26, 32) and with a first and a second vacuum chamber (28, 36) and with
- a force-output member (22) for delivering an actuating force to a master-brake-cylinder arrangement,
wherein the first working chamber (26) and the first vacuum chamber (28) are separated from one another via a first movable wall (30), and the second working chamber (32) and the second vacuum chamber (36) are separated from one another via a second movable wall (34) and in each instance are optionally capable of being connected to one another via the control-valve device (16), and
wherein at least one pneumatic connecting element (42) is provided, via which the first working chamber (26) is permanently connected to the second working chamber (32), and
wherein the pneumatic connecting element (42) is fitted to the first movable wall (30) and to the second movable wall (34),
**characterised in that** the pneumatic connecting element (42) exhibits an abutment flange (44) with which it bears in sealing manner against the first movable wall (30), and that the pneumatic connecting member (42) exhibits a front flange (52) with which it bears in sealing manner against the second movable wall (34).

2. Vacuum-assisted brake-force booster (10) according to claim 1,
**characterised in that** the pneumatic connecting element (42) is of hollow construction and is guided in a sealing manner within a positionally stable partition (40), the partition (40) separating the first vacuum chamber (28) from the second working chamber (32) in a sealing manner.

3. Vacuum-assisted brake-force booster (10) according to claim 1 or 2, **characterised in that** a first circumferential ring seal (46) is arranged between the first movable wall (30) and the pneumatic connecting element (42).

4. Vacuum-assisted brake-force booster (10) according to claim 3,
**characterised in that** the first circumferential ring seal (46) is integrally formed with the first movable wall (30).

5. Vacuum-assisted brake-force booster (10) according to one of the preceding claims,
**characterised in that** a second circumferential ring seal (54) is arranged between the second movable wall (34) and the pneumatic connecting element (42).

6. Vacuum-assisted brake-force booster (10) according to claim 5,
**characterised in that** the second circumferential ring seal (54) is integrally formed with the second movable wall (34).

7. Vacuum-assisted brake-force booster (10) according to claim 2 and one of the preceding claims,
**characterised in that** within the partition (40) a circumferential sliding seal (56) is provided which encompasses the pneumatic connecting element (42) in a sealing and relatively movable manner.

8. Vacuum-assisted brake-force booster (10) according to one of the preceding claims,
**characterised in that** the pneumatic connecting element (42) exhibits a first tubular portion (48) and a second tubular portion (50) of a smaller diameter in comparison with the first tubular portion (48), the two tubular portions (48, 50) overlapping one another within an axial region and being connected to one another via at least one connecting web (62).

9. Vacuum-assisted brake-force booster (10) according to claim 8,
**characterised in that** between the two tubular portions (48, 50) there is provided, in addition to the at least one connecting web (62), at least one connecting channel (64) which leads into the second working chamber (32).

10. Vacuum-assisted brake-force booster (10) according to claim 8 or 9, **characterised in that** the first tubular portion (48) leads into the first working chamber (26) and that the second tubular portion (50) is closed at the front in relation to the second vacuum chamber (36).

## Revendications

1. Servofrein à dépression (10) pour une installation de freinage de véhicule automobile, comprenant :
- un organe d'entrée de force (14) pouvant être couplé à une pédale de frein,
- un ensemble de vannes de commande (16) qui peut être actionné selon une valeur en correspondance avec un déplacement de l'organe d'entrée de force (14),
- un agencement de chambre en tandem (24) comprenant une première et une deuxième chambre de travail (26, 32) et une première et une deuxième chambre à dépression (28, 36), et
- un organe de sortie de force (22) destiné à délivrer une force d'actionnement à un agencement de maitre-cylindre de frein,
la première chambre de travail (26) et la première chambre à dépression (28) étant séparées l'une de l'autre par une première paroi mobile (30), et la deuxième chambre de travail (32) et la deuxième chambre à dépression (36) étant séparées l'une de l'autre par une deuxième paroi mobile (34), et pouvant respectivement être reliées mutuellement de manière sélective, par l'intermédiaire de l'ensemble de vannes de commande (16), et
au moins un élément de liaison pneumatique (42) étant prévu, par l'intermédiaire duquel la première chambre de travail (26) est reliée de manière permanente à la deuxième chambre de travail (32),
l'élément de liaison pneumatique (42) étant rapporté sur la première paroi mobile (30) et la deuxième paroi mobile (34),
**caractérisé en ce que**
l'élément de liaison pneumatique (42) présente un flasque d'appui (44) par lequel il s'appuie de manière étanche contre la première paroi mobile (30), et **en ce que**
l'élément de liaison pneumatique (42) présente un flasque frontal (52) par lequel il s'appuie de manière étanche contre la deuxième paroi mobile (34).

2. Servofrein à dépression (10) selon la revendication 1,
**caractérisé en ce que** l'élément de liaison pneumatique (42) est de configuration creuse et guidé de manière étanche dans une paroi séparatrice (40) de position stable, la paroi séparatrice (40) séparant de manière étanche la première chambre à dépression (28) de la deuxième chambre à dépression (32).

3. Servofrein à dépression (10) selon la revendication 1 ou la revendication 2,
**caractérisé en ce qu'**un premier joint d'étanchéité annulaire (46) périphérique est agencé entre la première paroi mobile (30) et l'élément de liaison pneumatique (42).

4. Servofrein à dépression (10) selon la revendication 3,
**caractérisé en ce que** le premier joint d'étanchéité annulaire (46) périphérique est réalisé d'un seul tenant avec la première paroi mobile (30).

5. Servofrein à dépression (10) selon l'une des revendications précédentes,
**caractérisé en ce qu'**un deuxième joint d'étanchéité annulaire (54) périphérique est agencé entre la deuxième paroi mobile (34) et l'élément de liaison pneumatique (42).

6. Servofrein à dépression (10) selon la revendication 5,
**caractérisé en ce que** le deuxième joint d'étanchéité annulaire (54) périphérique est réalisé d'un seul tenant avec la deuxième paroi mobile (34).

7. Servofrein à dépression (10) selon la revendication 2 et l'une des revendications précédentes,
**caractérisé en ce que** dans la paroi séparatrice (40) est prévu un joint d'étanchéité glissant (56) périphérique qui enserre l'élément de liaison pneumatique (42) de manière étanche et relativement mobile.

8. Servofrein à dépression (10) selon l'une des revendications précédentes,
**caractérisé en ce que** l'élément de liaison pneumatique (42) présente un premier tronçon tubulaire (48) et un deuxième tronçon tubulaire (50) de diamètre plus faible par rapport à celui du premier tronçon tubulaire (48), les deux tronçons tubulaires (48, 50) se chevauchant dans une zone axiale et étant reliés l'un à l'autre par l'intermédiaire d'au moins une nervure de liaison (62).

9. Servofrein à dépression (10) selon la revendication 8,
**caractérisé en ce qu'**il est prévu, entre les deux tronçons tubulaires (48, 50) à côté de ladite au moins une nervure de liaison (62), au moins un canal de liaison (64) qui débouche dans la deuxième chambre de travail (32).

10. Servofrein à dépression (10) selon la revendication 8 ou la revendication 9,
**caractérisé en ce que** le premier tronçon tubulaire (48) débouche dans la première chambre de travail (26), et **en ce que** le deuxième tronçon tubulaire (50) est fermé, du côté frontal, par rapport à la deuxième chambre à dépression (36).
